# EUROPEAN PATENT APPLICATION

(11) **EP 4 631 828 A1**
(43) Date of publication of application: **15.10.2025**
(21) Application number: 23900385.8
(22) Date of filing: 09.11.2023
(51) Int. Cl.: B62D 6/00, B62D 11/00, B62D 57/02, G05D 1/43

(54) **MOBILE DEVICE**

(30) Priority: 07.12.2022 JP 2022195316
(71) Applicant: Sumitomo Heavy Industries, Ltd., Tokyo 141-6025 (JP)
(72) Inventor: ETO, Haruhiko, Yokosuka-shi, Kanagawa 237-8555 (JP)
(74) Representative: Louis Pöhlau Lohrentz
(86) International application number: PCT/JP2023/040383
(87) International publication number: WO 2024/122264

(57) **Abstract**

Provided is a mobile device that is capable of traveling on a movement path with a small number of passages of irregularities. A mobile device (10) includes a deformation mechanism (14) that is capable of changing a relative disposition relationship of a plurality of wheels (16) and a control unit (30) that selects a movement path based on a deformation amount of the deformation mechanism (14).

## Description

### Technical Field

The present invention relates to a mobile device.

### Background Art

PTL 1 discloses a traveling device capable of climbing a wall surface with four wheels.

### Citation List

### Patent Literature

[PTL 1] International Publication No. 2021/247275

### Summary of Invention

### Technical Problem

In a case where a mobile device travels on a curved surface, there may be a request that the mobile device advances along a path in which irregularities are avoided as much as possible. An object of the present invention is to provide a mobile device capable of traveling on a movement path with a small number of passages of irregularities.

### Solution to Problem

A mobile device according to the present invention includes a deformation mechanism that is capable of changing a relative disposition relationship between a plurality of wheels, and a control unit that selects a movement path based on a deformation amount of the deformation mechanism.

### Advantageous Effects of Invention

According to the present invention, it is possible to provide the mobile device that travels on the movement path with a small number of passages of the irregularities.

### Brief Description of Drawings

Fig. 1A is a plan view of a mobile device according to an embodiment of the present invention.
Fig. 1B is a perspective view of the mobile device according to an embodiment of the present invention.
Fig. 2A is a partially broken front view of a structure of a wheel in Figs. 1A and 1B, and shows a state when the wheel is in contact with a surface parallel to a frame upper surface Su.
Fig. 2B is a partially broken front view of the structure of the wheel in Figs. 1A and 1B, and shows a state when the wheel is in contact with a left-upward inclined surface.
Fig. 3A is a partially broken side view of the structure of the wheel in Figs. 1A and 1B, and shows a state when the wheel is in contact with the surface parallel to the frame upper surface Su.
Fig. 3B is a partially broken side view of the structure of the wheel in Figs. 1A and 1B, and shows a state when the wheel is in contact with the inclined surface.
Fig. 4 is a diagram for describing a principle of processing of estimating a deformation amount of a suspension mechanism.
Fig. 5 is a diagram for describing the processing of estimating the deformation amount of the suspension mechanism.
Fig. 6 is a diagram describing an example of a movement path on which the mobile device travels.
Fig. 7 is a flowchart showing a traveling control processing executed by a control unit.

### Description of Embodiments

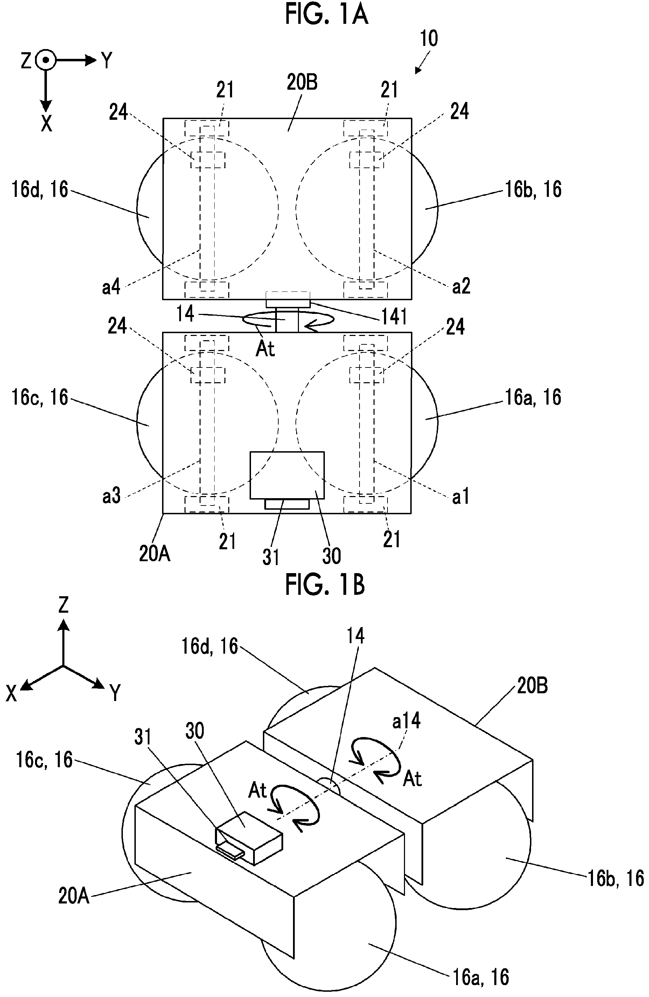

Hereinafter, an embodiment of the present invention will be described in detail with reference to drawings. Figs. 1A and 1B are a plan view and a perspective view of a mobile device according to the embodiment of the present invention, respectively.

A mobile device 10 of the present embodiment realizes traveling in which passage of irregularities is avoided as much as possible. In the present specification, the irregularities mean a surface shape of a traveling surface of wheels 16 that enables the wheels to maintain adsorption to the traveling surface by a passive change in a direction of a magnet 19 described below. In the traveling surface in which a second traveling surface intersects a first traveling surface perpendicularly, in order for the mobile device 10 to move from the first traveling surface to the second traveling surface, there is a need to actively change the direction of the magnet 19 (that is, to provide a control command from the outside for the direction change). The irregularities do not include a surface shape of the traveling surface requiring such a change in the direction of the magnet 19. The surface shape is distinguished from the irregularities, and may be referred to as an obstacle.

The mobile device 10 of the present embodiment can travel on a wall surface, a ceiling surface, or the like, and travel on a curved surface. The mobile device 10 includes a plurality of wheels 16 (first wheel 16a to fourth wheel 16d), a first frame 20A and a second frame 20B that support the plurality of wheels 16, a suspension mechanism (corresponding to deformation mechanism) 14 that can change a disposition relationship of the plurality of wheels 16, a drive unit 21 that drives the plurality of wheels 16, and a measurer 24 that measures a direction (for example, normal direction) of a contact surface of each wheel 16.

The mobile device 10 includes four wheels 16. The four wheels 16 each are rotatably supported centering on rotary shafts a1 to a4. Each of the wheels 16 is spherical and is configured to be capable of transmitting a driving force to the traveling surface in various directions. The number of the wheels 16 may be three or five or more. Further, it is not essential that the wheel 16 has the spherical shape, and the wheel 16 may have any shape, for example, a roller shape, as long as the wheel 16 follows the traveling surface in various directions and can transmit the driving force to the traveling surface.

The first wheel 16a and the third wheel 16c are rotatably supported by the first frame 20A. That is, the first frame 20A supports the rotary shaft a1 supporting the first wheel 16a and the rotary shaft a3 supporting the third wheel 16c. The rotary shafts a1 and a3 may be attached to the first frame 20A so as to be displaceable via a spring or the like. The rotary shafts a1 and a3 may be disposed substantially parallel to each other.

The second wheel 16b and the fourth wheel 16d are rotatably supported by the second frame 20B. That is, the second frame 20B supports the rotary shaft a2 supporting the second wheel 16b and the rotary shaft a4 supporting the fourth wheel 16d. The rotary shafts a2 and a4 may be attached to the second frame 20B so as to be displaceable via a spring or the like. The rotary shafts a2 and a4 may be disposed substantially parallel to each other.

The suspension mechanism 14 can change the disposition relationship between the first frame 20A and the second frame 20B in a twist direction At. The twist direction At is a pivot direction centering on an axis a14 extending in a direction in which the first frame 20A and the second frame 20B are aligned. The mechanism is also referred to as a rocker suspension mechanism.

The suspension mechanism 14 is provided with a measurer 141 such as an encoder that measures a degree of deformation. As means for measuring a deformation amount of the suspension mechanism 14, various types of means may be employed, such as analyzing an image of the mobile device 10, which is captured from the outside, for the deformation amount measurement.

The suspension mechanism 14 is not limited to the above example. For example, the suspension mechanism 14 may be a mechanism that enables a frame rotatably supporting the first wheel 16a and a frame rotatably supporting the second wheel 16b to the fourth wheel 16d to be displaceable relatively. Alternatively, the suspension mechanism 14 may be configured such that a frame supporting each wheel 16 is displaceable with respect to each of a plurality of frames supporting other wheels 16. The configuration in which the frame is displaceable is not limited to the configuration in which the frame is changeable in the twist direction. The configuration may employ a configuration in which each frame is translatable in a direction in which the frames are aligned, a configuration in which the frame is translatable perpendicularly or obliquely in a direction in which the frames are aligned, a configuration in which one or both of an angle and a distance between two frames are changeable via various link mechanisms, and a configuration in which two or more of these configurations are combined.

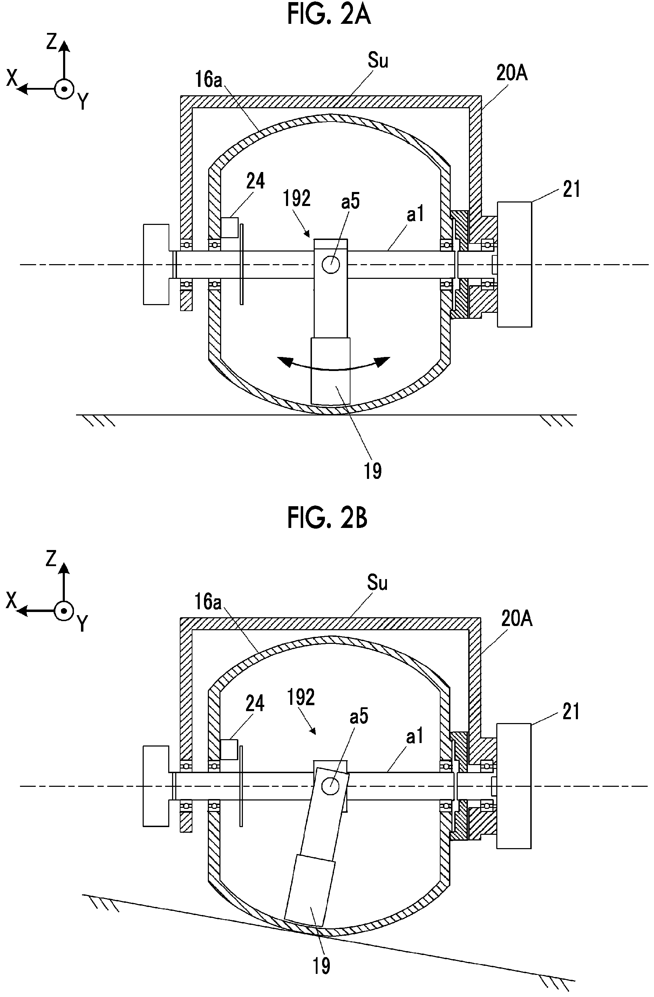

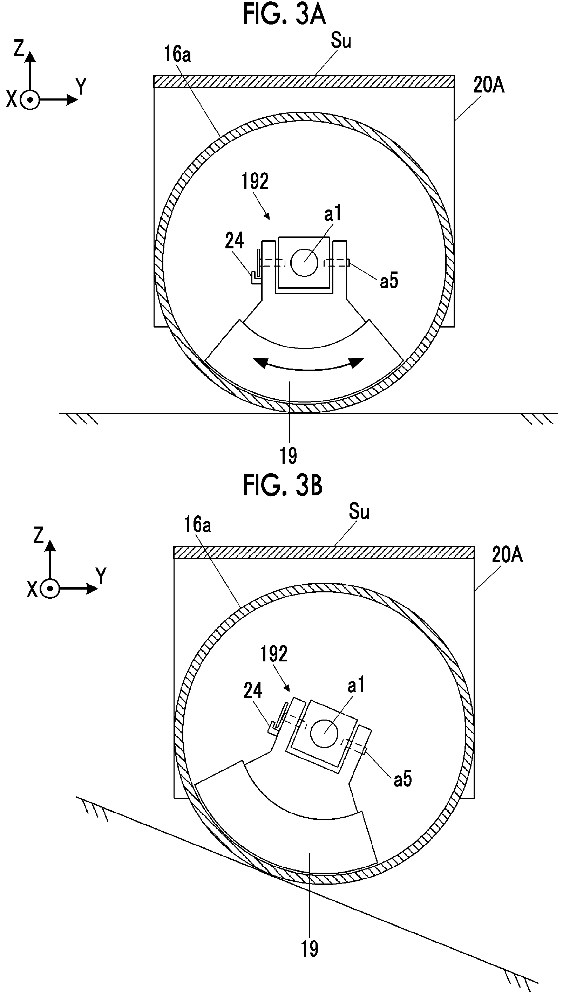

Figs. 2A and 2B are partially broken front views of a structure of the wheel in Figs. 1A and 1B. Fig. 2A shows a state when the wheel is in contact with a surface parallel to a frame upper surface Su, and Fig. 2B shows a state when the wheel is in contact with a left-upward inclined surface. Figs. 3A and 3B are partially broken side views of the structure of the wheel in Figs. 1A and 1B. Fig. 3A shows a state when the wheel is in contact with the surface parallel to the frame upper surface Su, and Fig. 3B shows a state when the wheel is in contact with the inclined surface.

A magnet 19 and a link mechanism 192 that supports the magnet 19 in a displaceable manner are provided inside the first wheel 16a. The link mechanism 192 supports the magnet 19 in a pivotal manner in a pivot direction centering on the rotary shaft a1 and a pivot direction centering on a shaft a5 that intersects (for example, is perpendicular to) the rotary shaft a1. The magnet 19 may be a permanent magnet or an electromagnet. With the configuration, in a case where the first wheel 16a is in contact with a contact surface of iron or the like, the magnet attracts the contact surface, and thus the first wheel 16a is adsorbed to the contact surface. Accordingly, the mobile device 10 can also be adsorbed even on the wall surface, the ceiling surface, or the like against gravity and can travel on the surface. Furthermore, with the link mechanism 192, even in a case where the first wheel 16a is in contact with contact surfaces in various directions, the magnets 19 face the contact surfaces, and a strong suction force with respect to the contact surfaces is obtained.

The measurer 24 that measures the direction (for example, normal direction) of the contact surface of the first wheel 16a is, for example, a two-axis encoder that measures a direction of the magnet 19. Since the magnet 19 faces the contact surface, the direction of the contact surface can be specified according to the direction of the magnet 19.

The configuration in which the direction of the contact surface of each wheel 16 is measured is not limited to the above example. For example, various configurations may be employed, such as measuring a distance to the contact surface by a plurality of distance sensors in the periphery of each wheel 16 to measure the direction of the contact surface.

The drive unit 21 rotationally drives the first wheel 16a. The drive unit 21 is a motor capable of controlling a rotation amount or a rotation speed.

Similarly to the first wheel 16a, the magnet 19, the link mechanism 192, and the measurer 24 are also provided inside the second wheel 16b to the fourth wheel 16d. Further, the mobile device 10 is provided with a plurality of drive units 21 that rotationally drive the second wheel 16b to the fourth wheel 16d, respectively. The drive unit 21 may be configured to be able to drive at least two wheels 16 with independent rotation amounts or rotation speeds.

With the mobile device 10 configured as described above, it is possible to perform movement of the mobile device 10 in various directions such as turning, turning left, turning right, and advancing straight with control of the rotation amount of each of the first wheel 16a to the fourth wheel 16d. Furthermore, even when the traveling surface is the curved surface, with the suspension mechanism 14, the mobile device 10 can travel in a state where all of the first wheel 16a to the fourth wheel 16d are in contact with the traveling surface.

### <Path Selection Control>

The mobile device 10 includes a control unit 30 that selects an advancing direction on any traveling surface, that is, a movement path. The control unit 30 is mounted on the mobile device 10. The control unit 30 may be provided separately from the mobile device 10, and may be configured to control the drive unit 21 via communication. The control unit 30 receives measurement data from the measurer 24 measuring the direction of the magnet 19 of each wheel 16 and the measurer 141 of the suspension mechanism 14.

The control unit 30 selects the movement path such that the deformation amount of the suspension mechanism 14 is reduced. In the present embodiment, in selecting the movement path, processing of estimating the deformation amount of the suspension mechanism 14 as described below is performed to determine an advancing path in which the estimated deformation amount of the suspension mechanism 14 is reduced.

The control unit 30 may repeat an actual operation in which the mobile device 10 slightly advances and then returns in various directions, without performing the estimation processing below, and hold and compare respective deformation amounts of the suspension mechanisms 14 when the mobile device 10 slightly advances to determine the movement path in which the deformation amount is reduced.

In general, the disposition relationship between the first wheel 16a to the fourth wheel 16d changes as the number of irregularities is larger on the traveling surface, and thus a deformation amount θ of the suspension mechanism 14 is larger. In other words, with advancing along the movement path in which the deformation amount θ of the suspension mechanism 14 is reduced, it is possible to realize traveling in which the passage of the irregularities is avoided as much as possible.

Therefore, with the selection of the movement path of the control unit 30 as described above, the mobile device 10 realizes the traveling in which the irregularities are avoided as much as possible.

In order for the mobile device 10 to avoid the obstacle described above, processing of avoiding the obstacle by another control may be performed, in addition to the control of avoiding the irregularities described above. The processing of avoiding the obstacle can include control of detecting an obstacle using a sensor, such as a three-dimensional scanner, and selecting a movement path for avoiding the obstacle.

### <Estimation Processing of Deformation Amount of Suspension Mechanism 14>

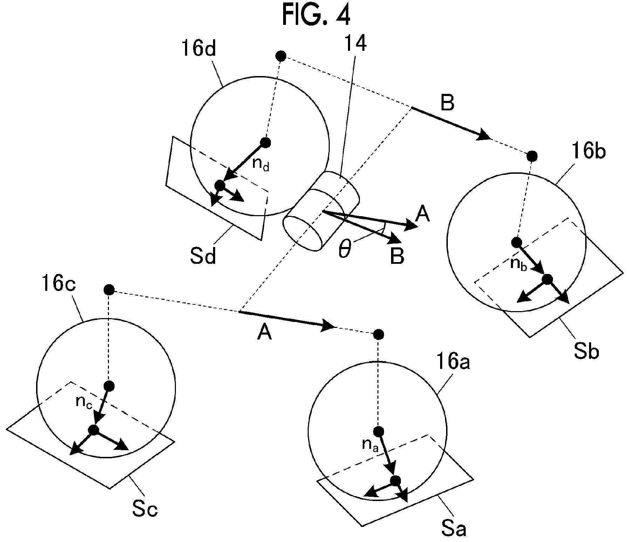

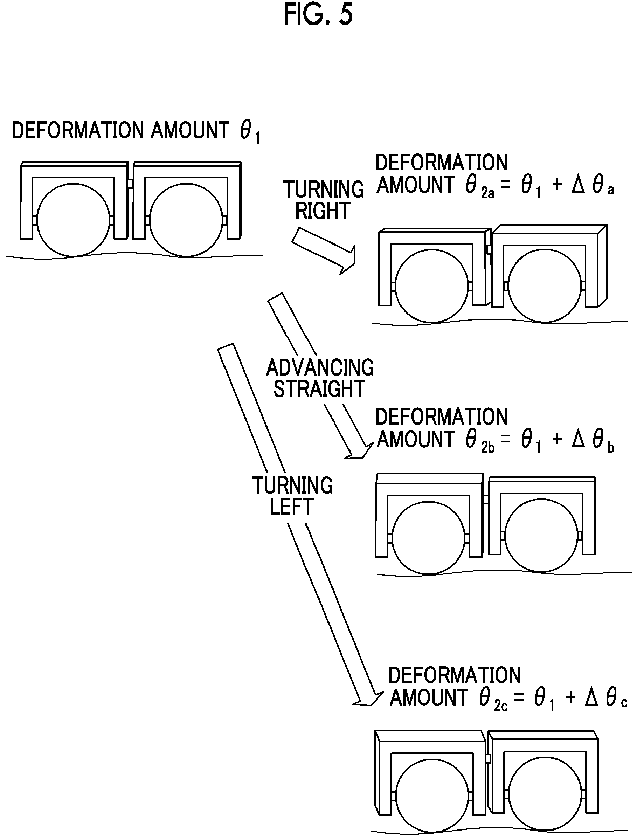

Fig. 4 is a diagram for describing a principle of deformation amount estimation processing of a suspension mechanism. Fig. 5 is a diagram for describing the deformation amount estimation processing of the suspension mechanism.

As shown in Fig. 4, when the mobile device 10 is located on a random curved surface, the first wheel 16a to the fourth wheel 16d are in contact with contact surfaces Sa to Sd that respectively face in certain directions. Here, directions of the contact surfaces Sa to Sd are represented by normal directions na to **nd.**

An actual traveling surface is assumed to include a plurality of irregularities having different sizes, and a surface with which the first wheel 16a to the fourth wheel 16d are in contact is assumed to be a curved surface. On the other hand, when attention is paid to small regions in contact with the first wheel 16a to the fourth wheel 16d, a contact surface of each small region can be approximately regarded as a small flat surface on which the surface in contact with the first wheel 16a to the fourth wheel 16d is flatly spread. The contact surfaces Sa to Sd in Fig. 4 represent flat surfaces of the small regions. The directions of respective contact surfaces Sa to Sd can be calculated from the measurement data of a plurality of measurers 24 provided in the first wheel 16a to the fourth wheel 16d, respectively. Furthermore, a positional relationship of respective contact surfaces Sa to Sd can be calculated from the measurement data of the measurer 141 of the suspension mechanism 14 and dimension data of the first frame 20A, the second frame 20B, and the four wheels 16.

On such contact surfaces Sa to Sd, the mobile device 10 can move along a plurality of advancing paths such as advancing straight, turning right, and turning left. When the mobile device 10 is assumed to advance along on any advancing path, respective trajectories of the first wheel 16a to the fourth wheel 16d can be calculated. The respective trajectories can be uniquely calculated because the trajectories correspond to trajectories along which the first wheel 16a to the fourth wheel 16d move along the flat-shaped contact surfaces Sa to Sd such that the mobile device 10 advances along one assumed advancing path. When the respective trajectories of the first wheel 16a to the fourth wheel 16d are calculated, a direction of the first frame 20A (vector A) and a direction of the second frame 20B (vector B) can be calculated, and thus the deformation amount θ of the suspension mechanism 14 in the twist direction can be calculated.

For example, as shown in Fig. 5, when a current deformation amount (angle in twist direction) of the suspension mechanism 14 is θ₁, deformation amounts θ₂ₐ, θ_{2b}, and θ_{2c} in cases of advancing along the respective advancing paths can be estimated such as the deformation amount of θ₂ₐ in the case of turning right, the deformation amount of θ_{2b} in the case of advancing straight, and the deformation amount of θ_{2c} in the case of turning left. In Fig. 5, Δθₐ, Δθ_{b}, and Δθ_{c} indicate change amounts of the deformation amounts θ in the cases where the mobile device 10 advances on respective advancing paths by defined amounts.

Therefore, the control unit 30 can determine which of the advancing paths causes the deformation amount θ of the suspension mechanism 14 to be reduced and can select, based on the determination, the movement path in which the deformation amount θ is reduced.

### <Second Selection Condition of Movement Path>

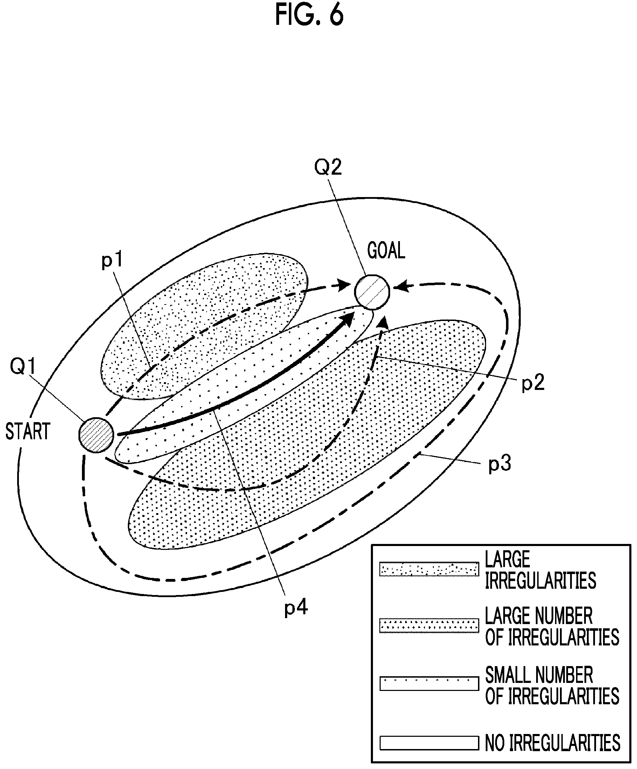

Fig. 6 is a diagram for describing an example of the movement path on which the mobile device travels.

The control unit 30 may only perform the selection control of the movement path described above to cause the mobile device 10 to travel. The control corresponds to the selection control of the movement path based on a first selection condition that the irregularities are avoided as much as possible.

On the other hand, the control unit 30 may perform together the selection of the movement path based on the first selection condition and the selection of the movement path based on a second selection condition different from the first selection condition. The second selection condition is, for example, a condition in which movement from a start point Q1 to a goal point Q2 is made over a distance as short as possible, as shown in Fig. **6****.** Any other condition may be employed as the second selection condition.

The control unit 30 includes an input unit 31 (Figs. 1A and 1B) to which data can be input. The input unit 31 is, for example, a data reading device that inputs data via a memory card. However, a data input method is not particularly limited and includes means for inputting data via communication, means for inputting data via an input device such as a keyboard or a mouse, and the like. In order to select the movement path based on the second selection condition, the control unit 30 inputs the second selection condition from the outside via the input unit 31.

The control unit 30 may use two evaluation functions in order to select the movement path based on the two selection conditions. That is, the control unit 30 prepares, as a first evaluation function, a function in which an evaluation value is higher as the deformation amount θ of the suspension mechanism 14 is lower and the evaluation value is lower as the deformation amount θ is higher. Further, the control unit 30 prepares, as a second evaluation function, a function in which the evaluation value is higher as the advancing path is closer to the goal point Q2 and the evaluation value is lower as the advancing path is farther from the goal point Q2. The control unit 30 performs weighting on the first evaluation function and the second evaluation function according to a degree of importance of the first selection condition and the second selection condition. The evaluation function and the weighting may be provided to the control unit 30 from an operator.

The control unit 30 calculates a sum of the first evaluation function and the second evaluation function subjected to the weighting, and selects the movement path having a large value to cause the mobile device 10 to travel. With such processing, it is possible to select the movement path in accordance with both of the first selection condition of avoiding the irregularities as much as possible and the second selection condition of moving to the goal point Q2 over a distance as short as possible, and to cause the mobile device 10 to travel.

With such processing, as shown in Fig. 6, the mobile device 10 can realize the movement in which movement paths p1 and p2 passing through a region having large irregularities and a region having a large number of irregularities are avoided and a movement path p3 that is a very roundabout path while having no irregularities is also avoided. The control unit 30 selects a movement path p4 that has a small number of irregularities and along which the mobile device 10 can reach the goal point Q2 with a short distance, and thus the mobile device 10 can realize the movement according to the first selection condition and the second selection condition.

### <Traveling Control Processing>

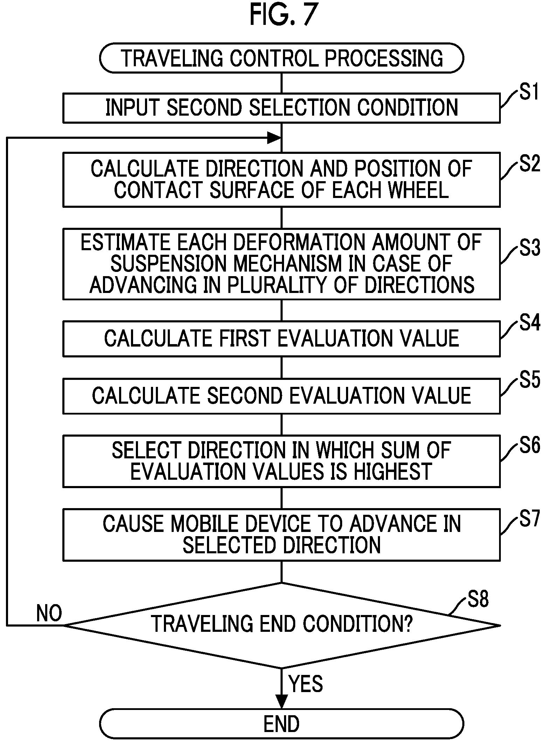

Fig. 7 is a flowchart showing traveling control processing executed by the control unit. Subsequently, the traveling control processing by the control unit 30 will be described. First, the control unit 30 inputs the second selection condition for selecting the movement path before a start of traveling (step S1). The second selection condition may be the second evaluation function itself described above.

Subsequently, the control unit 30 receives outputs of the measurer 141 and the measurer 24 to calculate the directions and positions of the contact surfaces of the first wheel 16a to the fourth wheel 16d (step S2), and estimates the deformation amounts of the suspension mechanism 14 in cases where the mobile device 10 advances in a plurality of directions (step S3). Estimated values of the deformation amounts each are substituted into the first evaluation function, and a plurality of first evaluation values corresponding to the plurality of directions are respectively calculated (step S4).

Further, the control unit 30 evaluates the cases where the vehicle advances in the plurality of directions by using the second evaluation function, and calculates a plurality of second evaluation values corresponding to the plurality of directions, respectively (step S5). In addition, the control unit 30 selects a direction in which a sum of the first evaluation value and the second evaluation value subjected to the weighting is highest as a direction of the movement path (step S6), and causes the mobile device 10 to advance by the defined amount in the direction (step S7).

The control unit 30 determines whether or not a traveling end condition is satisfied (step S8). In a case where NO determination is made, the control unit 30 returns the processing to step S2 to repeat loop processing of steps S2 to S6. When the traveling end condition is met, for example, the mobile device 10 reaches the goal point Q2, with the repetition of the loop processing, a determination result of YES is obtained in step S8, and thus the control unit 30 ends the traveling control processing.

As described above, with the mobile device 10 of the present embodiment, the movement path is selected based on the deformation amount of the suspension mechanism 14. Therefore, the selection of the movement path including the irregularities such that the suspension mechanism 14 is significantly deformed is reduced, and thus the mobile device 10 can travel along the movement path with a small number of the irregularities. Further, since the movement path can be selected as described above, even in a case where the mobile device 10 moves on the curved surface, the mobile device 10 easily performs the traveling in which values of desired parameters, such as a speed and a yaw angular velocity, are suppressed within target values.

Furthermore, with the mobile device 10 of the present embodiment, the suspension mechanism 14 is configured to be capable of changing the disposition relationship between the first wheel 16a and the second wheel 16b in the twist direction. Such a suspension mechanism 14 is significantly deformed in a case where there are irregularities having different phases on the left and right of the mobile device 10. Therefore, it is possible to select a movement path in which the irregularities are further avoided. The center axis a14 of the suspension mechanism 14 in the twist direction may be an axis in the same direction as the rotary shaft a1 of the first wheel 16a and the rotary shaft a2 of the second wheel 16b. The same direction means that directions are parallel to each other or are in a range of ±15° from parallel. The suspension mechanism 14 is configured to deform in the twist direction described above, and thus the suspension mechanism 14 deforms at a high frequency due to random irregularities. Therefore, it is possible to select the movement path in which the irregularities are further avoided as described above.

Furthermore, with the mobile device 10 of the present embodiment, the plurality of wheels 16 are spherical. Therefore, it is possible to realize stable traveling on a curved surface including the irregularities, and it is easy to measure the direction of the contact surface of each wheel 16 on the curved surface.

Furthermore, with the mobile device 10 of the present embodiment, the deformation amounts of the suspension mechanism 14 in the case where the mobile device 10 advances in the plurality of advancing directions respectively are compared, and thus the advancing direction is selected in which the deformation amount thereof is reduced. The case where the mobile device 10 advances in the plurality of advancing directions respectively may include the case of turning. With the above configuration, even in a case where a state of a traveling path is not known, it is possible to select the movement path in which the deformation amount is reduced, and thus realize the traveling of the mobile device 10 along the movement path with a small number of the irregularities.

Furthermore, with the mobile device 10 of the embodiment, the measurers 24 that measure the directions of the contact surfaces of the plurality of wheels 16 are respectively provided for the plurality of wheels 16, and the control unit 30 estimates the deformation amounts of the suspension mechanism 14 in the cases where the mobile device 10 advances in the plurality of advancing directions respectively, based on measurement results of the measurer 24. With the configuration, it is possible to select an appropriate movement path without moving the mobile device 10 for a test. Therefore, it is possible to realize the efficient movement of the mobile device 10.

Furthermore, with the mobile device 10 of the embodiment, the mobile device 10 includes the input unit 31 for inputting the second selection condition for selecting the movement path. The control unit 30 selects the movement path based on at least the first selection condition based on the deformation amount of the suspension mechanism 14 and the second selection condition. Therefore, for example, it is possible to realize the traveling of the mobile device 10 along the movement path with a small number of the irregularities while complying with another condition such as moving toward the goal point Q2.

The embodiment of the present invention has been described above. However, the present invention is not limited to the embodiment described above. For example, in the above embodiment, an example has been described in which the control unit 30 selects the movement path such that the deformation amount θ of the suspension mechanism 14 is reduced. However, the control unit 30 may select the movement path such that the change amount Δθ (change amount Δθ of the deformation amount θ per unit traveling distance, change amount Δθ of the deformation amount θ per unit time, or the like) of the deformation amount of the suspension mechanism 14 is reduced. With such control, it is possible to realize traveling with a small number of passages of steep irregularities. Further, in the above embodiment, a configuration has been described in which the mobile device is movable on the wall surface, the ceiling surface, or the like with the suction by the magnet. However, the mobile device may have a configuration that does not have the action of the suction. Further, the magnets may be disposed outside the wheels. Further, the configuration in which the plurality of wheels are driven is not limited to the example of the above embodiment, such as a configuration in which the plurality of wheels are each independently drivable or a configuration in which a difference in the rotation speed between the left and right wheels is provided for turning. For example, a configuration may be employed in which a steering mechanism that causes the directions of the rotary shafts of one or a plurality of wheels to turn is included and the steering mechanism can change the advancing direction. Further, the plurality of wheels may include a wheel that generates the driving force and a wheel that is driven. Further, the mobile device of the present invention may be employed for a mobile robot, which moves each part of a building or the like, and the like, in shipbuilding and heavy industry fields, construction fields, infrastructure inspection and maintenance fields, and the like. In addition, the detailed parts shown in the embodiment can be changed as appropriate within a range not departing from the concept of the invention.

### Industrial Applicability

The present invention can be used for a mobile device.

### Reference Signs List

- 10: mobile device
- 14: suspension mechanism (deformation mechanism)
- 16: wheel
- 16a: first wheel
- 16b: second wheel
- 16c: third wheel
- 16d: fourth wheel
- 19: magnet
- 192: link mechanism
- 20A: first frame
- 20B: second frame
- 21: drive unit
- 24, 141: measurer
- 30: control unit
- 31: input unit
- Sa to Sd: contact surface
- At: twist direction
- θ, θ₁, θ₂ₐ, θ_{2b}, θ_{2c}: deformation amount

## Claims

1. A mobile device comprising:
a deformation mechanism that is capable of changing a relative disposition relationship between a plurality of wheels; and
a control unit that selects a movement path based on a deformation amount of the deformation mechanism.

2. The mobile device according to claim 1,
wherein the plurality of wheels include a first wheel and a second wheel, and
the deformation mechanism is capable of changing the disposition relationship between the first wheel and the second wheel in a twist direction.

3. The mobile device according to claim 1,
wherein the plurality of wheels are spherical.

4. The mobile device according to claim 1,
wherein the control unit compares the deformation amount in a case of advancing in each of a plurality of advancing directions to select an advancing direction in which the deformation amount is reduced.

5. The mobile device according to claim 4, further comprising:
a measurer that measures a direction of a contact surface of each of the plurality of wheels,
wherein the control unit estimates the deformation amount in a case of advancing in each of the plurality of advancing directions, based on a measurement result of the measurer.

6. The mobile device according to claim 1, further comprising:
an input unit that inputs a second selection condition of the movement path,
wherein the control unit selects the movement path based on the deformation amount of the deformation mechanism and the second selection condition.
